Europäisches Patentamt

European Patent Office

Office européen des brevets

(19)

(11) Numéro de publication: **0 100 270**
**B1**

# (12) FASCICULE DE BREVET EUROPÉEN

(45) Date de publication du fascicule du brevet:
**15.10.86**

(21) Numéro de dépôt: **83401465.6**

(22) Date de dépôt: **13.07.83**

(51) Int. Cl.⁴: **B 30 B 9/26,** B 01 D 25/12

(54) **Procédé pour l'extraction d'une phase liquide contenue dans une matière analogue à une pulpe.**

(30) Priorité: **23.07.82 FR 8212895**

(43) Date de publication de la demande:
**08.02.84 Bulletin 84/6**

(45) Mention de la délivrance du brevet:
**15.10.86 Bulletin 86/42**

(84) Etats contractants désignés:
**AT BE CH DE GB IT LI LU NL SE**

(56) Documents cité:
**CH-A-184 685**
**DE-B-1 187 929**
**FR-A-2 128 679**

(73) Titulaire: **SOCIETE D'ETUDES ET DE RECHERCHES DE L'ECOLE NATIONALE SUPERIEURE D'ARTS ET METIERS en abrégé S E R A M, 151, Boulevard de l'Hôpital, F-75013 Paris (FR)**

(72) Inventeur: **Duchamp, Robert, 34bis, Boulevard de la Perruque, F-34000 Montpellier (FR)**
Inventeur: **Leprince, Jean- Marie, 8 place Jean Masset, F-28300 Mainvilliers (FR)**
Inventeur: **Tran, Ngoc Fhanh, 29, Boulevard d'Algérie, F-75019 Paris (FR)**
Inventeur: **Mikloweit, Gerd Michael, 54 rue Carnot, F-94700 Maisons- Alfort (FR)**
Inventeur: **Truchot, Patrick, 17 Allée Paul Cézanne, F-77420 Champs- Sur- Marne (FR)**

(74) Mandataire: **Chevallier, Robert Marie Georges, Cabinet BOETTCHER 23, rue La Boétie, F-75008 Paris (FR)**

EP 0 100 270 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

## Description

L'invention a pour objet un procédé selon le préambule de la revendication 1. Un tel procédé est utile pour extraire d'une matière analogue à une pulpe une phase liquide contenue dans cette matière. Comme exemple, d'une matière à laquelle ce procédé s'applique, on citera, sans intention limitative, celui de la pulpe de betteraves qui contient une grande quantité d'eau et dont on veut extraire cette eau afin de parvenir à un degré de déshydratation suffisant pour qu'elle puisse sécher ensuite naturellement sans apport de calories ou grâce à un fluide à basse temperature.

On connaît déjà des procédés et des moyens de déshydratation d'une matière humide réduite en particules ou en pulpe. Quand il s'agit de pulpe de betteraves ou d'autres végétaux, on utilise couramment une presse à vis dans laquelle la pulpe est comprimée progressivement. Sous la pression qui en résulte, l'eau est chassée hors de la pulpe. En réalité, on constate qu'une presse à vis ne réussit pas à réduire le taux d'humidité de la pulpe à une valeur inférieure à 75 %. On observe un phénomène analogue avec d'autres appareils d'extraction à pression comme les filtres-presses. Or, quand il s'agit d'une matière d'origine organique comme la pulpe, une extraction à un taux résiduel de 75 % d'humidité oblige à exécuter ensuite un séchage par voie thermique jusqu'à un taux d'humidité réduit de l'ordre de 10 à 15 % d'eau pour que la pulpe se conserve sans risque de détérioration.

Il est également connu de DE-B-1 187 929 un procédé concernant le pressage en couches mais avec des éléments intermédiaires rigides ou substantiellement rigides. Il en découle deux inconvénients:

- la nécessité d'empaqueter chaque couche pour qu'elle ne flue pas entre les éléments,
- la non obtention du véritable effet multicouche découvert par l'invention: entre des éléments intermédiaires substantiellement rigides, chaque couche est comprimée isolément comme si elle était seule, les éléments n'épousant pas les variations d'épaisseur qui se produisent inévitablement dans chaque couche. Ces variations d'épaisseur sont dues à une certaine hétérogénéité au point de vue physique de l'état de la matière, et à la nécessité d'opérer industriellement à vitesse élevée impliquant une certaine tolérance sur l'épaisseur nominale de chaque couche. C'est cette possibilité d'admettre des variations d'épaisseurs, auxquelles s'adaptent les éléments, qui produit l'effet multicouche et qui rend concurrentiel le pressage en couches par rapport aux presses à vis.

L'invention a pour but principal d'apporter un procédé d'extraction d'une phase liquide contenue dans une matière analogue à une pulpe consommant relativement peu d'énergie et qui atteint en une seule opération, à partir d'une valeur initiale de 95 à 90 % de teneur en phase liquide, une valeur résiduelle de 50 % ou moins qui permet ensuite un séchage naturel à l'air ambiant ou un séchage à basse température à l'aide d'air à faible chaleur.

Ce but est obtenu dans un procédé selon les termes du préambule de la revendication 1, préambule établi sur la base du document DE-B-1 187 929 en prenant les mesures énomées dans la partie caractérisante de cette revendication 1.

Des essais exécutés selon le procédé de l'invention ont montré que le nombre des couches multiples a une influence certaine sur le résultat. L'effet d'extraction devient vraiment satisfaisant à partir de 20 couches. Il n'y a pas de limite supérieure au nombre de couches, sauf les difficultés pratiques d'exécution.

L'épaisseur des couches est éqalement importante; une épaisseur de 1 à 1,25 cm est préférable mais des épaisseurs plus faibles ou plus fortes conviennent, bien que au-dessus de 1,5 cm l'effet d'extraction diminue rapidement et que la matière risque d'être chassée hors de la surface de pressage tandis qu'en dessous de 0,4 cm le débit de matière traitée devient trop faible pour une exploitation industrielle.

La valeur de la pression influe sur le résultat; la valeur préférée est de 3,5 MPa. Des valeurs supérieures peuvent être choisies mais elles conduisent à utiliser des installations plus puissantes et plus coûteuses. Des valeurs inférieures peuvent aussi être choisies, mais elles doivent être appliquées pendant une durée plus longue.

En effet, le phénomène mis en jeu par le procédé selon l'invention fait intervenir le temps de sorte que l'accroissement de la pression ne procure pas une accélération du procédé aussi forte qu'on pourrait l'espérer.

Par exemple, avec de la pulpe de betteraves ayant une humidité initiale de plus de 90 %, en opérant avec 50 couches d'une épaisseur comprise entre 0,8 et 1,2 cm chacune, contenues entre 51 toiles, une compression de l'ensemble à une pression de 3,5 MPa a donné les résultats suivants.

Après 4 mn de maintien de la pression, l'humidité résiduelle était de 50 %; après 2 heures de maintien de la pression, l'humidité résiduelle était de 10 %.

Pour faire apprécier l'influence du nombre de couches, on peut préciser qu'il a été constaté qu'une seule couche de 1,25 cm pressée entré deux toiles à une pression de 3,5 MPa pendant 4 mn contenait encore 70 % d'humidité. Cet essai montre que le procédé de l'invention procure un effet propre dès que le nombre de couches est supérieur à 1; en pratique cet effet devient appréciable à partir de 20 couches.

La mise en oeuvre du procédé de l'invention est en relation avec l'absence ou la présence de gaz contenant de la chaleur à récupérer. Si on dispose d'air encore chaud provenant d'une autre opération, on exerce la pression pendant une durée courte afin d'obtenir une humidité résiduelle comprise entre 50 % et 10 % en fonction de la quantité de calories récupérables.

Quand on ne dispose pas d'air, on applique la pression pendant la durée qui conduit à une humidité résiduelle de 10 %, ne nécessitant plus aucun séchage.

Il y a lieu de se rappeler que pour la pulpe de betteraves, son séchage entre une teneur en humidité de 50 % jusqu'à une teneur de 10 % ne nécessite plus qu'une énergie thermique qui est de 30 % de l'énergie nécessaire au séchage, de 75 % à 10 % à'humidité. Entre 60 % et 10 % d'humidité, l'énergie nécessaire n'est de 20 % de l'énergie nécessaire entre 75 % et 10 %.

A partir de 60 % d'humidité, l'énergie thermique devient assez faible pour pouvoir être récupérée d'autres sources de calories à basse température (gaz de combustion, condensats, vapeurs à condenser etc...).

On emploie ici l'expression "toiles à canaux d'évacuation de la phase liquide" pour signifier qu'une feuille pleine à surface lisse ne convient pas. Il faut utiliser une toile qui présente dans sa structure ou au moins sur l'une de ses faces principales une grand multitude de canaux qui se dirigent du centre vers la périphérie. Par exemple une toile tissée en fils de polypropylène, ayant une épaisseur de 0,5 mm, convient bien. Une telle toile se trouve dans le commerce.

Pour autant que le phénomène soit compris, le rôle de la pression n'est pas prépondérant. Sous l'effet de la pression, la phase liquide est évacuée par les canaux de la toile qui existent en tous sens entre les fils quand il s'agit d'une toile tissée. Mais cette évacuation ne peut se faire que si chaque particule soumise à la pression n'est pas trop éloignée de la surface d'une toile. Quand l'épaisseur de chaque couche devient trop forte, l'effet de drainage par la toile ne s'exerce plus dans toute l'épaisseur. On se retrouve alors dans les conditions classiques d'extraction par compression où on consacre une énergie importante et coûteuse à élever de plus en plus la pression exercée sur des couches épaisses à travers lesquelles le liquide n'a pas de chemin d'évacuation.

Le procédé de l'invention peut être mis en oeuvre selon de nombreuses variantes qui sont illustrées sur le dessin annexé auquel on se reportera au cours de la description qui suit. Sur ce dessin,

- la figure 1 est une représentation schématique de la mise en oeuvre du procédé entre deux plateaux de presse horizontaux.

- la figure 2 est une représentation schématique d'un mode de remplissage des intervalles entre des toiles suspendues,

- la figure 3 est une représentation schématique d'un mode de réalisation de couches multiples par enroulement d'une unique toile.

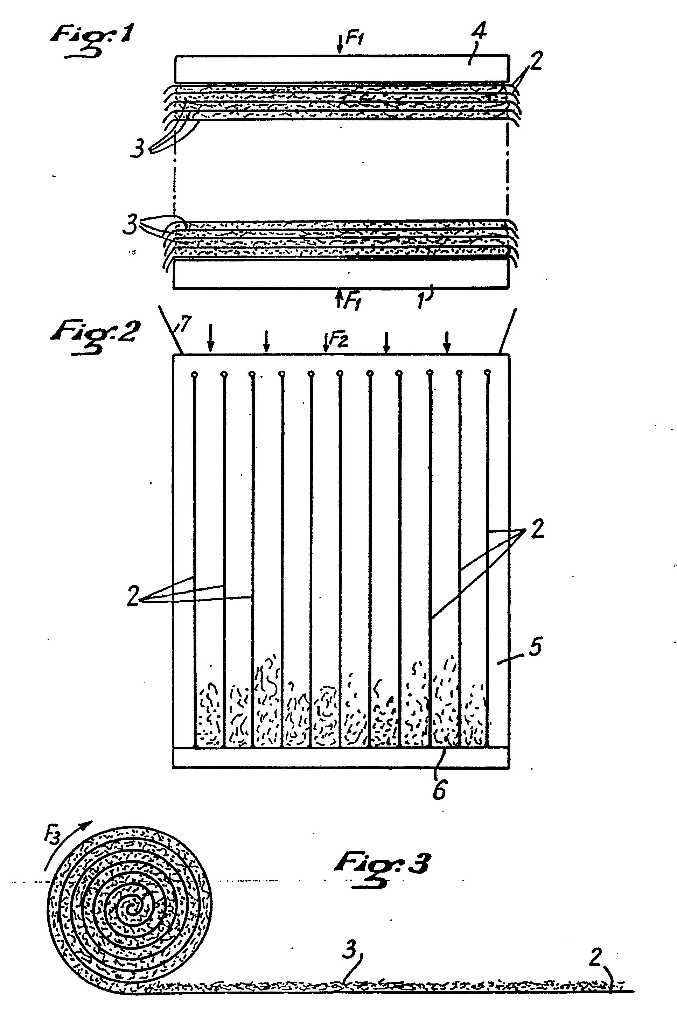

Sur un plateau inférieur horizontal 1 (fig. 1) d'une presse on dispose alternativement des toiles 2 et des couches 3 de la matière à traiter, selon le procédé de l'invention. Quand on a réalisé ainsi 50 couches 3, on comprime l'ensemble entre le plateau inférieur 1 et le plateau supérieur 4 de la presse, comme indiqué par des flèches F1. En variante, on peut préparer en dehors de la presse un matelas de couches 3 et de toiles 2 et placer l'ensemble entre les plateaux 1 et 4 pour le comprimer.

On peut aussi suspendre (figure 2) entre deux plaques transversales extrêmes 5 dont une seule est représentè sur la figure 2, de nombreuses toiles 2 qui sont réunies à leur extrémité inférieure par un moyen de fermeture 6; à partir d'une trémie 7 on fait descendre de la matière entre les toiles 2 comme indiqué par des flèches F2. Les toiles sont espacées de la distance voulue pour la création des couches 3 à l'épaisseur souhaitée. On peut faire vibrer les toiles 2, par un moyen connu, pour parvenir à un meilleur remplissage.

On peut encore répandre sur une unique toile 2 (figure 3) une couche de matière 3 en l'égalisant à l'épaisseur voulue et enrouler cette toile sur elle-même comme indiqué par une flèche F3. On obtient ainsi une multitude de couches 3 contenues entre les spires concentriques de la toile 2 enroulée.

Sur les figures les épaisseurs relatives n'ont pas été observées, pour la clarté du dessin.

Quand les couches pressées sont horizontales et que la pression est exercée nécessairement en sens vertical, il est obligatoire que la face supérieure de chaque toile, c'est-à-dire la face qui supporte la pulpe, présente des canaux d'évacuation, sa face inférieure pouvant alors être lisse.

Quand les couches pressées sont verticales, et que la pression est nécéssairement horizontale, il est préférable que les deux faces de chaque toile présentent des canaux d'évacuation. Il en est de même quand on presse selon des directions différentes une toile enroulée comme celle de la figure 3.

**Revendications**

1. Procedé pour l'extraction d'une phase liquide contenue dans une matière solide réduite en particules analogue à une pulpe, selon lequel on divise cette matière en au moins 20 couches (3) séparées par des éléments séparateurs (2) et on soumet l'ensemble à une pression, caractérisé en ce que

- l'epaisseur de chaque couche est comprise entre 0,4 et 1,5 cm,

- la pression est au minimum de 2,0 MPa,

- le temps de maintien en pression est compris entre 4 mn et 2 h,

- et les éléments séparateurs (2) sont des toiles tissées.

2. Procédé selon la revendication 1 caractérisé en ce qu'on divise la matière de préférence en 50 couches au moins.

3. Procédé selon la revendication 1 caractérisé en ce qu'on utilise une toile tissée de 0,5 mm environ d'épaisseur.

4. Procédé selon la revendication 1 caractérisé en ce qu'on utilise une toile tissée en fils de polypropylène.

5. Procédé selon la revendication 1 caractérisé en ce qu'on soumet l'ensemble à une pression de 3,5 MPa.

6. Procédé selon la revendication 1 caractérisé en ce qu'on réalise l'ensemble des couches et des toiles en déposant successivemet des toiles et de la matière entre les plateaux horizontaux (1, 4) d'une presse.

7. Procédé selon la revendication 1 caractérisé en ce qu'on réalise l'ensemble des couches et des toiles en tendant celles-ci verticalement entre deux plaques transversales extrêmes et on déverse de la matière entre les toiles.

8. Procédé selon la revendication 1 caractérisé en ce qu'on réalise l'ensemble des couches et des toiles en déposant sur une toile étalée une couche de matière ayant l'épaisseur voulue et en enroulant cette toile sur elle-même.

## Patentansprüche

1. Verfahren zum Extrahieren einer flüssigen Phase, die in einem festen Stoff enthalten ist, der auf einem Brei entsprechende Teilchen zurückgeführt ist, gemäss welchem man diesen Stoff in mindestens zwanzig Schichten (3) unterteilt, die durch Trennelemente (2) getrennt sind und die Gesamtanordnung einem Druck aussetzt, dadurch <u>gekennzeichnet,</u>

dass

- die Dicke jeder Schicht (3) zwischen 0,4 und 1,5 cm liegt,

- der Druck mindestens 2,0 MPa beträgt,

- die Zeitdauer der Aufrechterhaltung des Druckes zwischen 4 Minuten und 2 Stunden liegt,

- und die Trennelemente (2) aus gewebtem Tuch bestehen.

2. Verfahren nach Anspruch 1, dadurch <u>gekennzeichnet,</u> dass man den Stoff vorzugsweise in mindestens fünfzig Schichten unterteilt.

3. Verfahren nach Anspruch 1, dadurch <u>gekennzeichnet,</u> dass man ein gewebtes Tuch von etwa 0,5 mm Stärke verwendet.

4. Verfahren nach Anspruch 1, dadurch <u>gekennzeichnet,</u> dass man ein gewebtes Tuch aus Polypropylen-Fäden verwendet.

5. Verfahren nach Anspruch 1, dadurch <u>gekennzeichnet,</u> dass man die Gesamtanordnung einem Druck von 3,5 MPa unterwirft.

6. Verfahren nach Anspruch 1, dadurch <u>gekennzeichnet,</u> dass man die Gesamtanordnung der Schichten und der Tücher ausführt, indem man aufeinanderfolgend die Tücher und den Stoff zwischen den horizontalen Platten (1, 4) einer Presse anordnet.

7. Verfahren nach Anspruch 1, dadurch <u>gekennzeichnet,</u> dass man die Gesamtanordnung der Schichten und der Tücher herstellt, indem man die Tücher vertikal zwischen zwei äussere querliegende Platten spannt und den Stoff zwischen die Tücher abfliessen lässt.

8. Verfahren nach Anspruch 1, dadurch <u>gekennzeichnet,</u> dass man die Gesamtanordnung der Schichten und der Tücher herstellt, indem man auf einem ausgebreiteten Tuch eine Stoffschicht aufbringt, die eine gewünschte Stärke aufweist, und dieses Tuch auf sich selbst aufrollt.

## Claims

1. A method of extraction of a liquid phase contained in a solid matter reduced to particles similar to a pulp, in accordance with which this matter is divided into at least 20 layers (3) separated by separator elements (2) and the whole is subjected to one pressure, characterized in that

the thickness of each layer (3) lies between 0.4 and 1.5 cm;

the mininum value of the pressure is 2.0 MPa;

the time of keeping under pressure lies between 4 minutes and 2 hours; and

the separator elements (2) are woven fabric.

2. A method as in Claim 1, characterized in that the matter is preferably divided into at least 50 layers.

3. A method as in Claim 1, characterized in that a woven fabric is employed, which is about 0.5 mm thick.

4. A method as in Claim 1, characterized in that a fabric is employed, which is woven from polypropylene yarn.

5. A method as in Claim 1, characterized in that the whole is subjected to a pressure of 3.5 MPa.

6. A method as in Claim 1, characterized in that the assembly of the layers and the fabric is effected by laying down in succession sheets of fabric and the matter between the horizontal plates (1, 4) of a press.

7. A method as in Claim 1, characterized in that the assembly of the layers and the sheets of fabric is effected by stretching the latter vertically between two transverse end plates and the matter is poured between the sheets of fabric.

8. A method as in Claim 1, characterized in that the assembly of the layers and the fabric ia effected by depositing on a spread out sheet of fabric a layer of matter having the desired thickness and rolling up the said sheet of fabric over the said layer.

0 100 270

Fig.1

Fig.2

Fig.3

1